# EUROPÄISCHE PATENTSCHRIFT

(11) **EP 1 728 051 B1**
(45) Veröffentlichungstag und Bekanntmachung des Hinweises auf die Patenterteilung: **07.09.2016**
(21) Anmeldenummer: 05717119.1
(22) Anmeldetag: 21.03.2005
(51) Int. Cl.: G01F 1/58

(54) **VORRICHTUNG ZUM MESSEN UND/ODER ÜBERWACHEN DES DURCHFLUSSES EINES MESSMEDIUMS**
MEDIUM FLOW RATE MEASURING AND/ OR CONTROLLING DEVICE
DISPOSITIF DE MESURE ET/OU DE CONTROLE DE DEBIT D'UN FLUIDE A MESURER

(30) Priorität: 22.03.2004 DE 102004014300
(43) Veröffentlichungstag der Anmeldung: 06.12.2006
(73) Patentinhaber: Endress + Hauser Flowtec AG, 4153 Reinach (CH)
(72) Erfinder: KAPPERTZ, Fred, CH-4146 Hochwald (CH); BÄHR, Günther, CH-4051 Basel (CH); KÜNG, Thomas, CH-4052 Basel (CH)
(74) Vertreter: Andres, Angelika Maria
(86) Internationale Anmeldenummer: PCT/EP2005/051307
(87) Internationale Veröffentlichungsnummer: WO 2005/093376

(56) Entgegenhaltungen:
- DE-A1- 1 944 952
- DE-A1- 3 329 689
- DE-A1- 3 435 910
- DE-A1- 19 535 998
- GB-A- 1 206 953
- US-A- 4 346 604
- US-A- 4 428 241
- PATENT ABSTRACTS OF JAPAN Bd. 017, Nr. 457 (P-1597), 20. August 1993 (1993-08-20) & JP 05 107091 A (YAMATAKE HONEYWELL CO LTD), 27. April 1993 (1993-04-27)
- PATENT ABSTRACTS OF JAPAN Bd. 017, Nr. 396 (P-1578), 23. Juli 1993 (1993-07-23) & JP 05 072008 A (HITACHI LTD; others: 01), 23. März 1993 (1993-03-23)

## Beschreibung

Die Erfindung betrifft eine Vorrichtung zum Messen und/oder Überwachen des Durchflusses eines Messmediums, das ein Messrohr in Richtung der Längsachse des Messrohrs durchströmt, mit einer Magnetanordnung, die ein das Messrohr durchsetzendes und im wesentlichen quer zur Längsachse des Meßrohres verlaufendes Magnetfeld erzeugt, mit zwei Messelektroden, die galvanisch oder kapazitiv mit dem Messmedium gekoppelt und derart angeordnet sind, dass in sie eine durch das Messmedium hervorgerufene Messspannung induziert wird, und mit einer Auswerte-/Regeleinheit, die anhand der in die Messelektrode induzierten Messspannung Information über den Volumenstrom des Messmediums in dem Messrohr bereitstellt, wobei Signalleitungen vorgesehen sind, über die die Messsignale zwischen den Messelektroden und der Regel-/Auswerteeinheit geführt werden.

Magnetisch-induktive Durchflussmessgeräte nutzen für die volumetrische Strömungsmessung das Prinzip der elektrodynamischen Induktion aus: Senkrecht zu einem Magnetfeld bewegte Ladungsträger des Mediums induzieren in gleichfalls im wesentlichen senkrecht zur Durchflussrichtung des Mediums und senkrecht zu dem Magnetfeld angeordnete Messelektroden eine Induktionsspannung. Diese in die Messelektroden induzierte Spannung ist proportional zu der über den Querschnitt des Rohres gemittelten Strömungsgeschwindigkeit des Mediums; sie ist also proportional zum Volumenstrom.

Die DE 195 35 998 A1 beschreibt einen induktiven Durchflussmesser, welcher eine Erhöhung des Wirkungsgrads bzw. eine beträchtliche Verringerung der für die Erregung des Magnetfelderzeugungssystems aufzuwendende Energie dadurch erreicht, dass die Polschuhe des Magnetfelderzeugungssystems in Vertiefungen des Messkanalkörpers eingeschoben sind und dadurch aus geringer Entfernung auf den Strömungsmittelstrom einwirken.

Aus der GB 1 206 953 A ist ein magnetisch induktiver Durchflusssensor mit einem nicht-metallischen Block und einer zentralen Bohrung bekannt geworden. In die Bohrung wird das Messrohr eingesetzt. Zwecks Erzeugung des Magnetfelds ist dieser Block von zwei E-förmigen metallischen, laminierten Schulterstücken umgeben. Im Bereich des mittigen Teilstücks der E-förmigen metallischen Schulterstücke ist jeweils eine Spule angeordnet. Weiterhin sind sich diametral gegenüberliegende Messelektroden an dem Block vorgesehen, an welche Verbindungsleitungen angelötet sind. Die Verbindungsleitungen sind verdrillt und durch eine in einem der beiden mittleren Teilstücken vorgesehenen Bohrung nach außen geführt.

Der Erfindung liegt die Aufgabe zugrunde, die Signalleitungen eines magnetisch-induktiven Messgeräts u.a. platzsparend von den Messelektroden zum Umformer zu führen.

Die Aufgabe wird dadurch gelöst, dass die Signalleitungen zumindest in vorgegebenen Teilbereichen in die Magnetanordnung integriert sind, wobei die Signalleitungen auf einem Trägermaterial im wesentlichen in einer planaren Struktur aufgebracht sind, wobei das Trägermaterial zumindest in einem Teilbereich die Form einer Polschuhlamelle aufweist, und wobei das Trägermaterial mit den Signalleitungen derart in dem Polschuh mit den Polschuhlamellen integriert ist, dass die entsprechende planare Struktur anstelle der mittig angeordneten Polschuhlamelle in den Polschuh eingefügt ist. Bevorzugt sind die Signalleitungen im wesentlichen in einer planaren Struktur angeordnet. Eine vorteilhafte Ausgestaltung der erfindungsgemäßen Vorrichtung sieht vor, dass die Signalleitungen in einer planaren Struktur auf ein Trägermaterial aufgebracht sind. Vorzugsweise ist das Trägermaterial flexibel. Bei der planaren Struktur, in der die Signalleitungen angeordnet sind, handelt es sich bevorzugt um einen Flexprint.

Besonders geeignet ist die erfindungsgemäße Lösung, die Signalleitungen in einen Flexprint zu integrieren, in Verbindung mit magnetisch-induktiven Messgeräten mit kleinen Nennweiten. Beispielhaft seien an dieser Stelle magnetisch-induktive Messgeräte für den Batch-Betrieb genannt, wie sie von der Anmelderin unter der Bezeichnung DOSIMAG angeboten und vertrieben werden. Bei den gebräuchlichen Signalleitungen handelt es sich um Elektroden-kabel, die von den Messelektroden um eine der beiden Spulenanordnungen herum in Richtung Umformer geführt und dort verlötet bzw. elektrisch kontaktiert werden.

Eine derartige Anordnung ist aus den nachfolgenden Gründen nicht ganz unproblematisch. Aufgrund der Führung der beiden Elektrodenkabel um die Spulenanordnung herum ist die zwischen den beiden Elektrodenkabeln aufgespannte Fläche über einen ziemlich großen Bereich relativ groß. Es besteht dann eine erhöhte Gefahr, dass Stör-Magnetfeldlinien die aufgespannte Fläche durchsetzen und dadurch Störströme in die Elektrodenkabel induziert werden. Diese Störströme überlagern sich dem eigentlichen Messstrom, was nachfolgend zu einer erhöhten Messungenauigkeit des magnetisch-induktiven Durchflussmessgeräts führt. Nicht ganz unproblematisch ist auch die aus dem Stand der Technik bekannte Lösung insofern, als hier aufgrund konstruktiver Notwendigkeiten zwischen den Elektrodenkabeln eine Fläche aufgespannt wird, die senkrecht zu dem von der Magnetanordnung erzeugten Magnetfeld steht. Auch hierdurch können Störströme in die Elektrodenkabel induziert werden, die sich negativ auf die Messgenauigkeit auswirken.

Durch Integration der Signalleitungen in den Flexprint - und durch die damit verbundene exakte Positionierung der Signalleitungen im Bereich zwischen den Messelektroden und dem Umformer - lässt sich eine sehr symmetrische und definierte Leitungsführung realisieren. Beide Aspekte sind im Hinblick auf die Messgenauigkeit von erheblicher Bedeutung, da im Falle einer für alle gefertigten magnetisch-induktiven Messgeräte gleichbleibenden und definierten Leitungsführung auch geeignete Gegenmaßnahmen zur Kompensation von Störströmen aus dem Spulenkreis der Magnetanordnung ergriffen werden können. Ein weiterer Vorteil der Ausgestaltung der erfindungsgemäßen Vorrichtung als Flexprint, ist in der platzsparenden Leitungsführung zwischen den Messelektroden und dem Umformer zu sehen. Besonders hervorzuheben ist in diesem Zusammenhang die Plazierung des Flexprints anstelle einer Polschuhlamelle in einem Polschuh. Wie bereits erwähnt, ist diese Ausgestaltung besonders vorteilhaft bei magnetisch-induktiven Messgeräten mit kleinen Nennweiten. Weiterhin wird durch die erfindungsgemäße Ausgestaltung die Montage eines magnetisch-induktiven Messgeräts erheblich vereinfacht. Das spart Zeit und Kosten.

Gemäß einer vorteilhaften Weiterbildung der erfindungsgemäßen Vorrichtung sind die Signalleitungen auf einer Seite des Trägermaterials und symmetrisch zu der Längsachse des Trägermaterials angeordnet, wobei die Längsachse im wesentlichen parallel zur Hauptachse des Magnetfelds ausgerichtet ist. Weiterhin sind die Signalleitungen so auf dem Trägermaterial angeordnet, dass die zwischen den Signalleitungen aufgespannte Fläche minimal ist. Durch beide Maßnahmen lässt sich weitgehend verhindern, dass Induktionsströme aufgrund von Störungen aus dem Spulenkreis der Magnetfeldanordnung in die Signalleitungen induziert werden.

Eine vorteilhafte Ausgestaltung der erfindungsgemäßen Vorrichtung sieht vor, dass jede Magnetanordnung einen Polschuh umfasst, wobei der Polschuh aus mehreren Polschuhlamellen aufgebaut ist. In diesem Zusammenhang wird es als besonders günstig angesehen, wenn die Signalleitungen oder das die Signalleitungen tragende Trägermaterial in einem der beiden Polschuhe angeordnet sind bzw. ist.

Erfindungsgemäß weist das Trägermaterial, auf dem die Signalleitungen vorgesehen sind, die Form einer Polschuhlamelle auf; diese planare Struktur ist beispielsweise anstelle der mittig angeordneten Polschuhlamelle in den Polschuh eingefügt. Wie bereits an vorhergehender Stelle erwähnt, erlaubt diese Ausführungsform eine sehr platzsparende Führung der Signalleitungen von den Messelektroden weg in Richtung Umformer. Die Verbindung der auf dem Flexprint bzw. dem Trägermaterial angeordneten Signalleitungen mit dem Umformer erfolgt beispielsweise durch Löten oder durch mechanisches Verklemmen.

Darüber hinaus sind auf dem Trägermaterial weitere im wesentlichen planare elektronische Komponenten vorgesehen, die dazu dienen können, u.a. verbleibende induktive Einkopplungen außerhalb des Flexprints effektiv zu kompensieren bzw. zu neutralisieren. Da diese verbleibenden Einkopplungen aufgrund der bekannten und definierten Führung der Signalleitungen bestens bekannt sind, lassen sich diese effektiv kompensieren.

Gemäß einer vorteilhaften Ausgestaltung der erfindungsgemäßen Vorrichtung ist an dem Trägermaterial eine mechanische Kodierung vorgesehen. Diese ist so ausgelegt, dass die Gefahr einer Verpolung der Signalleitungen bei der Fertigung und dem Zusammenbau des Polschuhs minimiert wird.

Die Erfindung wird anhand der nachfolgenden Figuren näher erläutert. Es zeigt:
Fig. 1: eine schematische Darstellung eines magnetisch-induktiven Durchflussmessgeräts,
Fig. 2: eine perspektivische Darstellung einer aus dem Stand der Technik bekannten Führung der Signalleitungen zwischen den Messelektroden und dem Umformer bei einem magnetisch-induktiven Durchflussmessgerät,

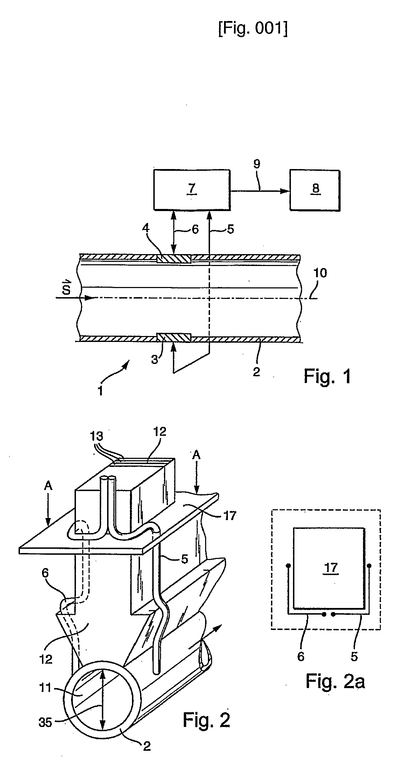

Fig. 2 a: einen Draufsicht auf den Polschuh gemäß der Kennzeichnung A in Fig. 2,

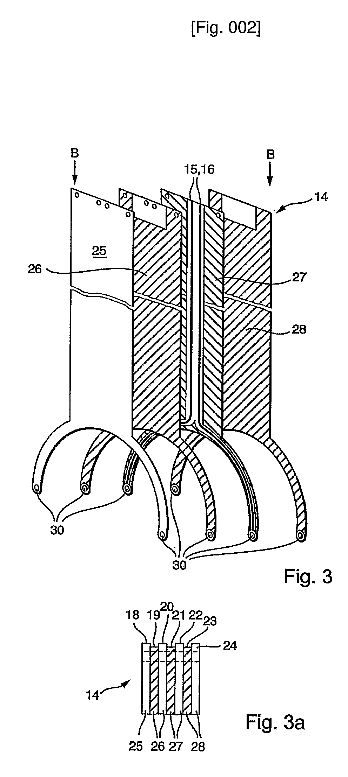

Fig. 3: eine Explosionsdarstellung einer ersten Ausgestaltung der erfindungsgemäßen Anordnung der Signalleitungen in einem Flexprint,
Fig. 3a: eine Draufsicht auf die in Fig. 3 gezeigte Ausgestaltung gemäß der Kennzeichnung B,

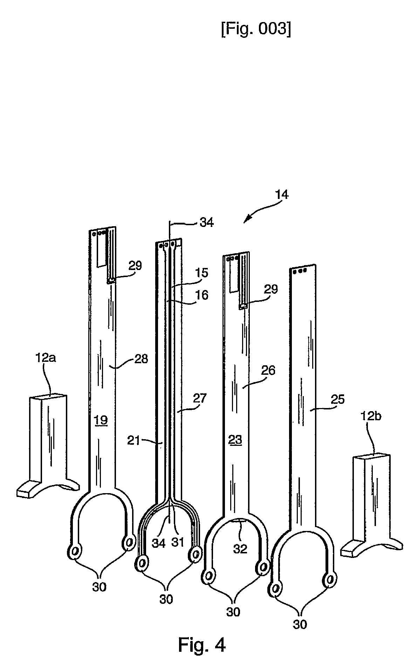

Fig. 4: eine Explosionsdarstellung einer zweiten Ausgestaltung des erfindungsgemäßen Flexprints und

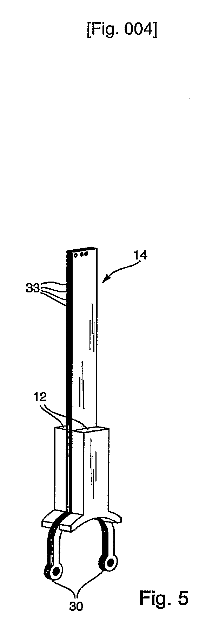

Fig. 5: eine perspektivische Ansicht eines erfindungsgemäßen Polschuhs mit integriertem Flexprint.
Fig. 1 zeigt eine schematische Darstellung eines magnetisch-induktiven Durchflussmessgeräts 1, wie es aus dem Stand der Technik bekannt ist. Das Messrohr 2 des in der Zeichnung nicht gesondert dargestellten Durchflussmessgeräts wird von einem gleichfalls nicht gesondert darstellten Messmedium in Richtung der Messrohrachse 10 durchströmt. Das Messmedium ist zumindest in geringem Umfang elektrisch leitfähig. Das Messrohr 2 selbst ist aus einem nicht leitfähigen Material gefertigt, oder es ist zumindest an seiner Innenseite mit einem nicht leitfähigen Material ausgekleidet.

Infolge eines senkrecht zur Flussrichtung des Messmediums ausgerichteten Magnetfeldes, das üblicherweise von zwei diametral angeordneten Elektromagneten erzeugt wird, die in der Zeichnung ebenfalls nicht zu sehen sind, wandern in dem Messmedium befindliche Ladungsträger zu der entgegengesetzt gepolten Messelektrode 3; 4 ab. Die sich zwischen den beiden Messelektroden 3, 4 aufbauende Spannung ist proportional zu der über den Querschnitt des Messrohrs 2 gemittelten Strömungsgeschwindigkeit des Messmediums, d. h. sie ist ein Maß für den Volumenstrom des Messmediums im Messrohr 2. Das Messrohr 2 ist übrigens über Verbindungselemente, die in der Zeichnung gleichfalls nicht gesondert dargestellt sind, mit einer Rohrleitung, durch die das Messmedium hindurchströmt, verbunden.

Über die Signalleitungen 5, 6 sind die Messelektroden 3, 4 mit der Regel-/Auswerteeinheit 7 verbunden. Über die Verbindungsleitung 9 können desweiteren Messdaten zu der Anzeigeeinheit 8 weitergeleitet werden.

In den Figuren Fig. 2 und Fig. 2a ist die Führung der Elektrodenkabel zwischen den Messelektroden 3, 4 und dem Umformer, der zumindest die Regel-Auswerteeinheit 7 enthält, dargestellt. Die von den Messelektroden 3, 4 wegführenden Elektrodenkabel 5, 6 verlaufen an gegenüberliegenden Seitenflächen des Polschuhs 12. Der gegenüberliegende Polschuh der Magnetanordnung ist in Fig. 2 nicht gesondert wiedergegeben. Der Polschuh 12 besteht bevorzugt aus einer Vielzahl von zusammengesetzten Polschuhlamellen 13. Durch den schichtweisen Aufbau des Polschuhs 12 werden Wirbelströme unterdrückt.

Im Bereich der virtuellen Fläche 17 zeigen die Elektrodenkabel 5, 6 einen geänderten Richtungsverlauf. Gut sichtbar ist dies in der Fig. 2a, die eine Draufsicht auf die virtuelle Fläche 17 zeigt. Die zwischen den beiden Elektrodenkabeln 5, 6 in diesem Bereich aufgespannte Fläche ist senkrecht zu dem Magnetfeld ausgerichtet, das von der Magnetanordnung erzeugt wird. In diesem Bereich ist die Gefahr, dass Störströme in die Elektrodenkabel 5, 6 induziert werden, besonders groß.

Die Figuren Fig. 3 und Fig. 4 zeigen jeweils Explosionsdarstellungen von Ausgestaltungen der erfindungsgemäßen Anordnung der Signalleitungen 15, 16, die in eine Schichtstruktur, im gezeigten Fall in einen Flexprint 14 integriert sind. Der Flexprint 14 ersetzt hierbei - wie insbesondere in Fig. 5 zu sehen ist - eine der Polschuhlamellen 13 des Polschuhs 12. Bevorzugt handelt es sich bei der ersetzten Polschuhlamelle 13 um die mittig angeordnete Polschuhlamelle 13.

Im gezeigten Fall sind die Signalleitungen 15, 16 auf die Trägerschicht 27 aufgebracht bzw. sie sind aus einer leitfähigen Beschichtung der Trägerschicht 27 herausgeätzt. Bei der Trägerschicht 27 handelt es sich bevorzugt um eine flexible Trägerschicht 27. Die flexible Trägerschicht 27 hat ebenso wie die weiteren Schichten 25, 26, 28 der planaren Trägerstruktur im Bereich des Polschuhs 13 im wesentlichen die Form einer Polschuhlamelle 13.

Die beiden Signalleitungen 15, 16 sind symmetrisch und in hohem Maße definiert zur Längsachse 34 der flexiblen Trägerschicht 27 angeordnet. Über weite Bereiche sind die beiden Signalleitungen 15, 16 dicht nebeneinander angeordnet. Hierdurch lässt sich die zwischen den beiden Signalleitungen 15, 16 aufgespannte und senkrecht zum zeitlich veränderlichen Magnetfeld angeordneten Fläche minimieren. Andererseits stört der als Polschuhlamelle 13 ausgestaltete Flexprint 14 aufgrund seiner planaren Struktur die Funktion des Polschuhs 12 relativ wenig.

Fig. 3a zeigt den schichtweisen Aufbau der in Fig. 3 gezeigten bevorzugten Ausgestaltung des erfindungsgemäßen Flexprints 14. Der Flexprint 14 besteht aus vier Schichten, welche von links nach rechts beschrieben werden: einer ersten isolierenden Schicht 25, einer ersten Abschirmschicht 26, einer die Signalleitungen 15, 16 tragenden Trägerschicht 27 und einer zweiten Abschirmschicht 28. Die isolierende Schicht 25 ist aus einem isolierenden Material gefertigt. Die erste Abschirmschicht 26 ist auf der Seitenfläche 19, die der isolierenden Schicht 25 zugewandt ist, mit einer leitfähigen Beschichtung versehen. Die andere Seitenfläche 20 der ersten Abschirmschicht 26 ist elektrisch isolierend ausgestaltet. Auf der Seitenfläche 21 der Trägerschicht 27 sind die Signalleitungen 15, 16 angeordnet. Die zweite Seitenfläche 22 der Trägerschicht 27 ist als Isolator ausgebildet. Bei der zweiten Abschirmschicht 28 ist die Seitenfläche 23, die der isolierenden Seitenfläche 22 der Trägerschicht 27 zugewandt ist, mit einer leitfähigen Beschichtung versehen. Die Außenfläche 24 der zweiten Abschirm-schicht 28 ist als Isolationsschicht ausgestaltet. Die Aufgabe der ersten Abschirmschicht 26 und der zweiten Abschirmschicht 28 besteht darin, die Signalleitungen 15, 16 vor elektrischen Störfeldern zu schützen.

Ein wesentlicher Vorteil der Verwendung des Flexprints 14 anstelle der im Stand der Technik verwendeten Elektrodenkabel ist darin zu sehen, dass eine Verpolung der Signalleitungen 15, 16 bei der Montage des Durchflussmess-geräts 1 quasi ausgeschlossen ist. Um die Signalleitungen 15, 16 zu verpolen, müssten die aus dem Polschuh überstehenden Teilbereiche des Flexprints 14 in sich verdrillt werden.

Die in Fig. 4 gezeigte Darstellung des Flexprints 14 unterscheidet sich von der in Fig. 3 gezeigten nur in wenigen Details. An der Trägerschicht 27 und an der ersten Abschirmschicht 26 sind eine Ausnehmung 31 bzw. eine Zunge 32 vorgesehen, die die Funktion einer mechanischen Codierung übernehmen. Hierdurch wird sichergestellt, dass der Flexprint 14 korrekt zusammengesetzt wird.

In Fig. 4 ist auf einer Seitenfläche der Schicht 26 und auf einer Seitenfläche der Schicht 28 jeweils eine elektronische Komponente 29 angeordnet. Diese elektronischen Komponenten können u.a. - wie bereits an vorhergehender Stelle beschrieben - der Kompensation von verbleibenden Stör-Einkopp-lungen dienen.

Fig. 5 zeigt die erfindungsgemäße Anordnung der Signalleitungen 15, 16 in einem Flexprint 14, der in einen Polschuh 12 integriert ist. Der Flexprint 14 ist so in dem Polschuh 12 angeordnet, dass er quasi die mittlere Polschuhlamelle 13 ersetzt. Der nach unten über den Polschuh 12 herausragende Teil des Flexprints 14 trägt die Anschlussringe 30 für die Messelektroden 3, 4. Der nach oben überstehende Teil des Flexprints 14 hat im oberen Bereich die Abgriffe 33 für den elektrischen Anschluss an den Umformer bzw. an die Regel-/Auswerteeinheit 7.

Die erfindungsgemäße Lösung zeichnet sich durch eine kompakte modulare Bauweise auf, wodurch sich der Montageaufwand insbesondere für ein magnetischinduktives Durchflussmessgerät erheblich verringern lässt. Weiterhin kann eine Verpolung der Messelektroden 3, 4 mit an Sicherheit grenzender Wahrscheinlichkeit ausgeschlossen werden. Aufgrund der durch den planaren Aufbau möglichen definierten, symmetrischen Führung der Signalleitungen 15, 16 wird der Einfluss von unerwünschten Induktions-strömen auf ein Mindestmaß reduziert. Verbleibende Restströme lassen sich gezielt durch das Einbringen von entsprechenden elektronischen Komponenten kompensieren.

## Patentansprüche

1. Vorrichtung zum Messen und/oder Überwachen des Durchflusses eines Messmediums (11), das ein Messrohr (2) in Richtung der Längsachse (10) des Messrohrs (2) durchströmt, mit zumindest einer Magnetanordnung (12), wobei die Magnetanordnung einen Polschuh (12) umfasst, der aus mehreren Polschuhlamellen (13) aufgebaut ist, wobei die Magnetanordnung ein das Messrohr (2) durchsetzendes und im wesentlichen quer zur Längsachse (10) des Messrohrs (2) verlaufendes Magnetfeld erzeugt, mit zwei Messelektroden (3, 4), die galvanisch oder kapazitiv mit dem Messmedium (11) gekoppelt und derart angeordnet sind, dass in sie eine durch das Messmedium (11) hervorgerufene Messspannung induziert wird, mit einer Auswerte-/Regeleinheit (7), die anhand der in die Messelektrode (3; 4) bzw. Messelektroden (3, 4) induzierten Messspannung Information über den Volumenstrom des Messmediums (11) in dem Messrohr (2) bereitstellt, wobei Verbindungsleitungen (5, 6) bzw. Signalleitungen (15, 16) vorgesehen sind, über die die Messsignale zwischen den Messelektroden (3, 4) und der Regel-/Auswerteeinheit (7) geführt werden,
**dadurch gekennzeichnet,**
**dass** die Signalleitungen (15, 16) auf einem Trägermaterial (27) im wesentlichen in einer planaren Struktur aufgebracht sind, wobei das Trägermaterial (27) zumindest in einem Teilbereich die Form einer Polschuhlamelle (13) aufweist, und
**dass** das Trägermaterial (27) mit den Signalleitungen (15, 16) derart in dem Polschuh (12) mit den Polschuhlamellen (13) integriert ist, dass die entsprechende planare Struktur anstelle einer mittig angeordneten Polschuhlamelle (13) in den Polschuh (12) eingefügt ist.

2. Vorrichtung nach Anspruch 1,
**dadurch gekennzeichnet,**
**dass** das Trägermaterial (27) flexibel ist und
**dass** es sich bei der planaren Struktur um einen Flexprint (14) handelt.

3. Vorrichtung nach Anspruch 1 oder 2,
**dadurch gekennzeichnet,**
**dass** die Signalleitungen (15, 16) auf einer Seitenfläche (21) einer flexiblen Trägerschicht (27) und symmetrisch zu der Längsachse der flexiblen Trägerschicht (27) angeordnet sind, wobei die Längsachse (34) im wesentlichen parallel zur Hauptachse (35) des Magnetfelds ausgerichtet ist.

4. Vorrichtung nach Anspruch 1 oder 3,
**dadurch gekennzeichnet,**
**dass** die Signalleitungen (15, 16) so auf dem Trägermaterial bzw. der flexiblen Trägerschicht (27) angeordnet sind, dass die zwischen den Signalleitungen (15, 16) aufgespannte Fläche minimal ist.

5. Vorrichtung nach Anspruch 1 oder 5,
**dadurch gekennzeichnet,**
**dass** auf der planaren Struktur zumindest eine im wesentlichen planare elektronische Komponente (29) vorgesehen ist.

6. Vorrichtung nach Anspruch 1, 5 oder 6,
**dadurch gekennzeichnet,**
**dass** an dem Trägermaterial bzw. an der planaren Struktur eine mechanische Kodierung (31, 32) vorgesehen ist.

## Claims

1. Apparatus for measuring and/monitoring the flow of a medium (11), which flows through a measuring tube (2) in the direction of the longitudinal axis (10) of the measuring tube (2), with at least one magnet arrangement (12), wherein the magnet arrangement comprises a pole piece (12), which is made from numerous pole piece ribs (13), wherein the magnet arrangement generates a magnetic field that passes through the measuring tube (2) and is essentially perpendicular to the longitudinal axis (10) of the measuring tube (2), with two measuring electrodes (3, 4), which are coupled by galvanic or capacitive means with the medium (11) and arranged in such a way that a measuring voltage caused by the medium (11) is induced in said electrodes, with an evaluation/control unit (7) which uses the measuring voltage induced in the measuring electrode (3 ; 4) or measuring electrodes (3, 4) to provide information about the volume flow of the medium (11) in the measuring tube (2), wherein connection lines (5, 6) or signal lines (15, 16) are provided via which the measuring signals are routed between the measuring electrodes (3, 4) and the control/evaluation unit,
**characterized in that**
the signal lines (15, 16) are applied on a carrier material (27) essentially in a planar structure, wherein the carrier material (27) has the shape of a pole piece rib (13) at least in a subsection, and
**in that** the carrier material (27) with the signal lines (15, 16) is integrated in the pole piece (12) with the pole piece ribs (13) in such a way that the corresponding planar structure is inserted in the pole piece (12) instead of a centrally arranged pole piece rib (13).

2. Apparatus as claimed in Claim 1,
**characterized in that**
the carrier material (27) is flexible and **in that** the planar structure is a flexi-board (14).

3. Apparatus as claimed in Claim 1 or 2,
**characterized in that**
the signal lines (15, 16) are arranged on a lateral surface (21) of a flexible carrier layer (27) and symmetrically in relation to the longitudinal axis of the flexible carrier layer (27), wherein the longitudinal axis (34) is essentially parallel to the main axis (35) of the magnetic field.

4. Apparatus as claimed in Claim 1 or 3,
**characterized in that**
the signal lines (15, 16) are arranged on the carrier material or the flexible carrier layer (27) in such a way that the area between the signal lines (15, 16) is minimal.

5. Apparatus as claimed in Claim 1 or 5,
**characterized in that**
at least one essentially planar electronic component (29) is provided on the planar structure.

6. Apparatus as claimed in Claim 1, 5 or 6,
**characterized in that**
a mechanical code (31, 32) is provided on the carrier material or on the planar structure.

## Revendications

1. Dispositif destiné à la mesure et/ou la surveillance du débit d'un produit de mesure (11), qui s'écoule à travers un tube de mesure (2) en direction de l'axe longitudinal (10) du tube de mesure (2), avec au moins un ensemble d'aimants (12), l'ensemble d'aimants comprenant une pièce polaire (12), qui est constituée de plusieurs lamelles de pièce polaire (13), l'ensemble d'aimants générant un champ magnétique traversant le tube de mesure (2) et qui est pour l'essentiel perpendiculaire à l'axe longitudinal (10) du tube de mesure (2), avec deux électrodes de mesure (3, 4), qui sont couplées par voie galvanique ou capacitive avec le produit de mesure (11) et disposées de telle sorte qu'est induite dans les électrodes une tension de mesure engendrée par le produit de mesure (11), avec une unité d'exploitation / de régulation (7), qui met à disposition, au moyen de la tension de mesure induite dans l'électrode de mesure (3 ; 4) ou dans les électrodes de mesure (3, 4), l'information sur le débit volumique du produit de mesure (11) dans le tube de mesure (2), des lignes de raccordement (5, 6) ou des lignes de signal (15, 16) étant prévues, par l'intermédiaire desquelles les signaux de mesure sont acheminés entre les électrodes de mesure (3, 4) et l'unité de régulation / d'exploitation,
**caractérisé**
**en ce que** les lignes de signal (15, 16) sont appliquées sur un matériau support (27) pour l'essentiel dans une structure planaire, le matériau support (27) présentant au moins dans une zone partielle la forme d'une lamelle de pièce polaire (13), et
**en ce que** le matériau support (27) avec les lignes de signal (15, 16) est intégré dans la pièce polaire (12) avec les lamelles de pièce polaire (13) de telle sorte que la structure planaire correspondante est insérée dans la pièce polaire (12) en lieu et place d'une lamelle de pièce polaire (13) disposée en position centrée.

2. Dispositif selon la revendication 1,
**caractérisé**
**en ce que** le matériau support (27) est flexible et que concernant la structure planaire, il s'agit d'un circuit imprimé flexible (14).

3. Dispositif selon la revendication 1 ou 2,
**caractérisé**
**en ce que** les lignes de signal (15, 16) sont disposées sur une surface latérale (21) d'une couche support flexible (27) et de façon symétrique par rapport à l'axe longitudinal de la couche support flexible (27), l'axe longitudinal (34) étant orienté pour l'essentiel parallèlement à l'axe principal (35) du champ magnétique.

4. Dispositif selon la revendication 1 ou 3,
**caractérisé**
**en ce que** les lignes de signal (15, 16) sont disposées sur le matériau support ou la couche support flexible (27) de telle sorte que la surface définie entre les lignes de signal (15, 16) soit minimale.

5. Dispositif selon la revendication 1 ou 5,
**caractérisé**
**en ce qu'**est prévu sur la structure planaire au moins un composant électronique (29) pour l'essentiel planaire.

6. Dispositif selon la revendication 1, 5 ou 6,
**caractérisé**
**en ce qu'**est prévu un codage mécanique (31, 32) sur le matériau support ou sur la structure planaire.
